# EUROPEAN PATENT APPLICATION

(11) **EP 0 927 745 A1**
(43) Date of publication of application: **07.07.1999**
(21) Application number: 97933863.9
(22) Date of filing: 31.07.1997
(51) Int. Cl.: C08L 33/04, C08L 33/24, C08L 43/02, C08K 5/20, C08K 5/521, G02B 1/04, G02B 5/22, C08F 20/10, C08F 220/52, C08F 230/02

(54) **OPTICAL PLASTIC MATERIAL AND PROCESS FOR THE PRODUCTION THEREOF**

(30) Priority: 31.07.1996 JP 20170796
(71) Applicant: KUREHA KAGAKU KOGYO KABUSHIKI KAISHA, Tokyo 103 (JP)
(72) Inventor: KATONO, Hiroki, Fukushima 974 (JP); MACHIDA, Katsuichi, Fukushima 974 (JP); SHOUJI, Masuhiro, Fukushima 979-01 (JP); OGIHARA, Takeo, Fukushima 974 (JP); SAKAGAMI, Teruo, Iwaki-shi Fukushima 974 (JP)
(74) Representative: Grünecker, Kinkeldey, Stockmair & Schwanhäusser Anwaltssozietät
(86) International application number: JP9702665
(87) International publication number: WO9804621

(57) **Abstract**

Disclosed herein are plastic optical materials, which have performance characteristics that rays in a specific wavelength region are absorbed with high efficiency, can attain desired optical properties such as good glare-proofness and moreover has low water absorption property, and a production process thereof.

The plastic optical materials comprise an acrylic resin, and a phosphate group, an amide group and a metal ion component composed of a rare earth metal ion contained in the acrylic resin. The phosphate group preferably exists in the form chemically bonded to the structure of a polymer constituting the acrylic resin, and the polymer constituting the acrylic resin is preferably a copolymer obtained by copolymerizing a phosphate group-containing monomer represented by the following formula (1) and a monomer copolymerizable therewith:

PO(OH)ₙR₃₋ₙ Formula (1)

wherein R means a polymerizable functional group represented by the following formula (2), and n is 1 or 2:

CH₂=CXCOO(C₂H₄O)ₘ- Formula (2)

wherein X denotes a hydrogen atom or a methyl group, and m is an integer of 0 to 5.

## Description

### TECHNICAL FIELD

The present invention relates to plastic optical materials and a production process thereof, and more particularly to plastic optical materials which absorb visible rays in a specific wavelength region with high efficiency and are excellent in glare-proofing function, high contrast-imparting function, color purity-compensating function, luminance-controlling function and the like, and a production process thereof.

### BACKGROUND ART

Attempts have heretofore been made to introduce a metal ion into a transparent material so as to impart optical properties specific to the metal ion to the transparent material.

As metal ions used for imparting optical properties, rare earth metal ions are of great utility value in that they have the properties of sharply absorbing rays in their specific wavelength regions and of emitting their characteristic fluorescence. For example, a trivalent neodymium ion has been known to have the property of sharply absorbing rays having a wavelength of and around 580 nm. An optical material made of glass containing a neodymium ion having such property is utilized as an optical material having excellent glare-proofness in, for example, glare-proof spectacle lenses, glare-proof filters used for televisions and the like, luminance-controlling filters for lighting equipment, tone-compensating filters, etc.

Plastic optical materials in which a trivalent neodymium ion is incorporated into a resin material such as an acrylic resin have been recently proposed (reference may be made to, for example, Japanese Patent Application Laid-Open No. 136727/1996 and Japanese Patent Application No. 289628/1995).

In such plastic optical materials, an acrylic resin with a phosphate group chemically bonded to the structure of its polymer is used as the resin material for the purpose of uniformly dispersing the metal ion in the resin material.

In the above-described plastic optical materials, however, the metal ion cannot be contained in a high proportion in the acrylic resin. Therefore, such a plastic optical material involves a problem that the optical properties imparted by the metal ion are not sufficiently developed when the optical material is used for producing optical goods having a small thickness.

In addition, in order to enhance the dispersibility of the metal ion, it is necessary to cause a phosphate group to be contained in a high proportion in the structure of the polymer constituting the acrylic resin. However, such an acrylic resin becomes high in water absorption property, so that it cannot be used as an optical material from the viewpoint of practical use.

### DISCLOSURE OF THE INVENTION

The present invention has been made in view of the foregoing circumstances and achieved on the basis of the finding that the dispersibility of a metal ion in an acrylic resin can be enhanced by containing an amide group together with a phosphate group in the acrylic resin.

It is an object of the present invention to provide a plastic optical material which has performance characteristics that rays in a specific wavelength region are absorbed with high efficiency, can attain desired optical properties such as good glare-proofness and moreover has low water absorption property.

Another object of the present invention is to provide a process capable of producing the above plastic optical material with advantage.

A plastic optical material according to the present invention comprises an acrylic resin, and a phosphate group, an amide group and a metal ion component composed of a rare earth metal ion contained in the acrylic resin.

In the plastic optical material according to the present invention, the phosphate group may preferably exist in the form chemically bonded to the structure of a polymer constituting the acrylic resin. Further, the polymer constituting the acrylic resin may preferably be a copolymer obtained by copolymerizing a phosphate group-containing monomer represented by the following formula (1) and a monomer copolymerizable therewith:

PO(OH)ₙR₃₋ₙ Formula (1)

wherein R means a polymerizable functional group represented by the following formula (2), and n is 1 or 2:

CH₂=CXCOO(C₂H₄O)ₘ- Formula (2)

wherein X denotes a hydrogen atom or a methyl group, and m is an integer of 0 to 5.

In the plastic optical material according to the present invention, the amide group may preferably be contained by dispersing an amide group-containing compound represented by the following formula (3), (4) or (5) in the acrylic resin: 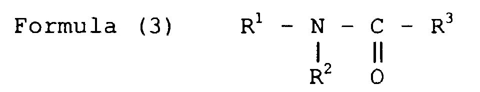 wherein R¹ and R² independently mean a hydrogen atom, an alkyl group having 1 to 4 carbon atoms or a phenyl group and may be the same or different from each other, and R³ denotes a hydrogen atom, an alkyl group having 1 to 4 carbon atoms or an alkenyl group having 2 or 3 carbon atoms; 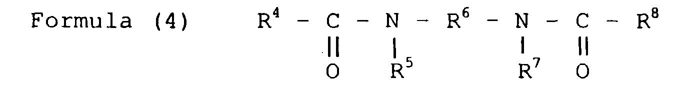 wherein R⁴ and R⁸ independently mean a hydrogen atom, an alkyl group having 1 to 4 carbon atoms or an alkenyl group having 2 or 3 carbon atoms and may be the same or different from each other, R⁵ and R⁷ independently denote a hydrogen atom, an alkyl group having 1 to 4 carbon atoms or a phenyl group and may be the same or different from each other, and R⁶ represents an alkylene group having 1 to 6 carbon atoms; or 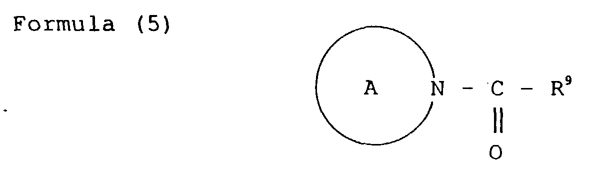 wherein a ring A means a 4-, 5- or 6-membered ring or a heterocyclic ring thereof, and R⁹ denotes a hydrogen atom, an alkyl group having 1 to 4 carbon atoms or an alkenyl group having 2 or 3 carbon atoms.

In the plastic optical material according to the present invention, the amide group may preferably exist in the form chemically bonded to the structure of a polymer constituting the acrylic resin.

In the present invention, it may be preferred that the total content of the amide group and the phosphate group in the acrylic resin should be 0.8 to 50 mass%, a proportion of the amide group to the phosphate group is 10:90 to 70:30 in terms of a mass ratio, and the content of the metal ion component in the acrylic resin should be 0.1 to 30 mass%.

A process for producing a plastic optical material according to the present invention comprises the step of subjecting 100 parts by mass of the following monomer mixture (I) to a polymerization treatment in the presence of 0.3 to 80 parts by mass of a rare earth metal compound.

Monomer mixture (I): a monomer mixture containing at least a phosphate group-containing monomer represented by the above formula (1) and an amide group-containing compound represented by the above formula (3), (4) or (5), wherein the total content of the phosphate group in the phosphate group-containing monomer and the amide group in the amide group-containing compound is 0.8 to 50 mass% based on the whole polymerizable component, and a proportion of the amide group to the phosphate group is 10:90 to 70:30 in terms of a mass ratio.

In the production process according to the present invention, it may be preferred that a polymerizable compound in which R³ in the formula (3), R⁴ or R⁸ in the formula (4) or R⁹ in the formula (5) is an alkenyl group having 2 or 3 carbon atoms should be used as the amide group-containing compound.

The present invention will hereinafter be described in detail.

The plastic optical materials according to the present invention comprise an acrylic resin, and a metal ion component, a phosphate group and an amide group contained in the acrylic resin.

In the present invention, the term "phosphate group" means a group represented by a formula PO(OH)ₙ- (n being 1 or 2), while the term "amide group" means a group represented by the following formula (6):

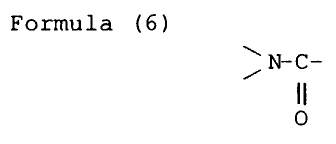

In the plastic optical materials according to the present invention, the metal ion component contained in the acrylic resin is composed of a rare earth metal ion, and specific examples of the rare earth metal ion include metal ions of lanthanoids, i.e., lanthanum, cerium, praseodymium, neodymium, promethium, samarium, europium, gadolinium, terbium, dysprosium, holmium, erbium, thulium, ytterbium and lutetium.

These rare earth metal ions may be used either singly or in any combination thereof.

Such a metal ion component is contained in the acrylic resin by using a specific metal compound containing its corresponding metal ion as a source of supply. Examples of such a specific metal compound include anhydrides and hydrates of metal salts composed of any of the above-mentioned rare earth metals and an organic acid such as acetic acid, benzoic acid or oxalic acid, or an inorganic acid such as sulfuric acid, hydrochloric acid, nitric acid or hydrofluoric acid, and oxides of the rare earth metals. However, the metal compounds are not limited to these compounds only.

Other metal ions than the metal ions composed of the rare earth metal may be contained as a part of the metal ion component in the acrylic resin within limits not impeding the objects of the present invention, for example, in a proportion of 30 mass% of the whole metal ion component or lower. As such other metal ions, there may be used ions of sodium, potassium, calcium, iron, manganese, cobalt, magnesium, nickel and the like. These metal ions can be contained in the acrylic resin by using metal compounds containing their corresponding metal ions as sources of supply like the metal ions composed of the rare earth metal.

The proportion of the metal ion component contained in the acrylic resin is preferably 0.1 to 30 mass%, particularly 0.2 to 26 mass%. If the proportion of the metal ion component is lower than 0.1 mass%, any optical material, which absorbs rays in a wavelength region specific to the metal ion with high efficiency, may not be obtained in some cases. If the proportion exceeds 30 mass% on the other hand, it is difficult to uniformly disperse the metal ion component in the acrylic resin.

In order to contain the metal ion component in such a proportion, it is preferred that the metal compound, which is a supply source of the metal ion component, should be used in a proportion of 0.3 to 80 parts by mass, particularly 0.5 to 75 parts by mass per 100 parts by mass of the raw materials other than the metal compound.

In the plastic optical materials according to the present invention, the phosphate group is contained as a component for dispersing the metal ion component in the acrylic resin.

The phosphate group may be contained either in a state that a compound containing the phosphate group is dispersed in the acrylic resin or in a state chemically bonded to the structure of a polymer constituting the acrylic resin.

Since the metal ion component is kept in a stable state by being coordinated with the phosphate group, it is however preferred that the phosphate group should be contained in the acrylic resin in the state chemically bonded to the structure of the polymer constituting the acrylic resin in that the dispersibility of the metal ion component can be enhanced to contain the metal ion component in a high proportion.

In the case where such an acrylic resin with the phosphate group chemically bonded to the structure of the polymer is used, it is preferred that the proportion of the phosphate group in the polymer should be 0.5 to 50 mass%, particularly 1 to 40 mass%.

If this proportion is lower than 0.5 mass%, it is difficult to uniformly disperse the metal ion component in the acrylic resin even when an amide group, which will be described subsequently, is contained together. Therefore, no plastic optical material excellent in clearness can be provided. If this proportion exceeds 50 mass% on the other hand, it is difficult to uniformly disperse the metal ion component in the acrylic resin, and the hygroscopicity of the resulting optical material becomes high. Such an optical material is not preferable from the viewpoint of practical use.

As the acrylic resin with the phosphate group chemically bonded to the structure of its polymer, there may preferably be used a copolymer resin (hereinafter may also be referred to as "the specific acrylic copolymer resin") obtained by copolymerizing a monomer mixture composed of a monomer (hereinafter referred to as "the specific phosphate group-containing monomer") represented by the formula (1) and a monomer (hereinafter referred to as "the copolymerizable monomer") copolymerizable therewith.

In the formula (1) which represents the molecular structure of the specific phosphate group-containing monomer, the group R is an acryloyloxy group (in the case where X is a hydrogen atom) or a methacryloyloxy group (in the case where X is a methyl group), to which an ethylene oxide group or a polyethylene oxide group may be bonded, as represented by the formula (2).

Here, the recurring number m of the ethylene oxide group is an integer of 0-5. If the value of m exceeds 5, the resulting copolymer will become greatly lowered in hardness and hence lacking in practicability as an optical material.

The number n of the hydroxyl group in the formula (1) is 1 or 2. The specific phosphate group-containing monomer in which the value of n is 1 and the specific phosphate group-containing monomer in which the value of n is 2 may be used either singly or in combination according to properties of the resulting optical material, and the molding or forming process and intended end application thereof. When both monomers are used, their mixing proportions may be suitably selected.

More specifically, the specific phosphate group-containing monomer in which the value of n is 1 is a monomer in which the number of radical-polymerizable, ethylenically unsaturated bonds bonded to the phosphorus atom is 2, and has crosslink-polymerizability. On the other hand, in the specific phosphate group-containing monomer in which the value of n is 2, the number of the ethylenically unsaturated bonds is 1, and the number of hydroxyl groups bonded to the phosphorus atom is 2. Such a monomer is high in bonding ability to the metal ion component.

Accordingly, in the case where the optical material according to the present invention is subjected to an injection molding process or extrusion process, which is a general molding or forming process for thermoplastic resins, it is preferred to use the specific phosphate group-containing monomer in which the value of n is 2.

On the other hand, when both the specific phosphate group-containing monomer in which the value of n is 1 and the specific phosphate group-containing monomer in which the value of n is 2 are used, it is preferred to use a cast polymerization process by which the intended shape can be directly obtained upon the preparation of the specific acrylic copolymer resin.

As described above, any one of the specific phosphate group-containing monomer in which the value of n is 1 and the specific phosphate group-containing monomer in which the value of n is 2 may be selected according to properties of the resulting optical material, and the molding or forming process and intended end application thereof. However, it is preferred to use both monomers together. In particular, the combined use of the specific phosphate group-containing monomer in which the value of n is 1 and the specific phosphate group-containing monomer in which the value of n is 2 in proportions that they are contained in substantially equimolar amounts to each other, for example, in proportions that their molar ratio amounts to 45:55 to 55:45, is preferred because the solubility of the metal compound, which is a supply source of the metal ion component, in the monomer mixture becomes high.

In order to obtain the specific acrylic copolymer resin, a monomer mixture composed of the specific phosphate group-containing monomer and the copolymerizable monomer is used. The use of such a monomer mixture permits the adjustment of performance characteristics of the resulting optical material, such as hygroscopicity, refractive index and hardness.

No particular limitation is imposed on the copolymerizable monomers used so far as they satisfy, for example, the following requirements:
(1) being miscible and soluble uniformly with the specific phosphate group-containing monomer used;
(2) having good radical copolymerizability with the specific phosphate group-containing monomer used; and
(3) being able to provide an optically transparent copolymer.

Specific examples of such a copolymerizable monomer include:
monofunctional (meth)acrylates [the term "(meth)acrylate" as used herein means each of "acrylate" and "methacrylate"], such as lower alkyl (meth)acrylates the alkyl groups of which have 1 to 12 carbon atoms, such as methyl (meth)acrylate, ethyl (meth)acrylate, n-propyl (meth)acrylate, n-butyl (meth)acrylate, isobutyl (meth)acrylate, n-hexyl (meth)acrylate, n-octyl (meth)acrylate and 2-ethylhexyl (meth)acrylate; modified alkyl (meth)acrylates such as glycidyl (meth)acrylate, 2-hydroxyethyl (meth)acrylate, 2-hydroxypropyl (meth)acrylate, 2-hydroxybutyl (meth)acrylate and butoxyethyl (meth)acrylate; and aromatic ring-containing (meth)acrylates such as phenoxyethyl (meth)acrylate; and
polyfunctional (meth)acrylates such as ethylene glycol di(meth)acrylate, diethylene glycol di(meth)acrylate, polyethylene glycol di(meth)acrylate, 1,3-butylene glycol di(meth)acrylate, 1,4-butanediol di(meth)acrylate, 1,6-hexanediol di(meth)acrylate, neopentylglycol di(meth)acrylate, 2-hydroxy-1,3-dimethacryloyloxypropane, 2,2-bis[4-methacryloyloxyethoxy-phenyl]-propane, 2-hydroxy-1-acryloyloxy-3-methacryloyloxy-propane, trimethylolpropane tri(meth)acrylate, pentaerythritol tri(meth)acrylate and pentaerythritol tetra(meth)acrylate.

Carboxylic acids having a radical-polymerizable unsaturated bond, such as acrylic acid, methacrylic acid, 2-methacryloyloxyethylsuccinic acid and 2-methacryloyloxyethylphthalic acid, and aromatic vinyl compounds such as styrene, α-methylstyrene, chlorostyrene, dibromostyrene, methoxystyrene, divinylstyrene, vinylbenzoic acid, hydroxymethylstyrene and trivinylbenzene may also be used.

These compounds may be used either singly or in any combination thereof.

A proportion of the specific phosphate group-containing monomer to the copolymerizable monomer to be used is preferably within a range of from 3:97 to 80:20, particularly from 5:95 to 75:25 in terms of a mass ratio.

Since the specific phosphate group-containing monomer is a monomer high in radical polymerizability, almost all the monomers in the monomer mixture can be considered to be converted into a copolymer by subjecting the monomer mixture to a polymerization treatment. Therefore, when the specific phosphate group-containing monomer and the copolymerizable monomer are used in the above-described proportions, an acrylic resin with the phosphate group bonded to the structure of the polymer in the above-described specific proportion is obtained.

In the plastic optical materials according to the present invention, an amide group is contained as another component for dispersing the metal ion component together with the phosphate group.

When the amide group is contained together with the phosphate group, the dispersibility of the metal ion component can be more enhanced compared with the single use of the phosphate group. Although the reason therefor is not fully elucidated, it is considered to be attributable to, for example, the fact that the ability of the phosphate group to be coordinated with the metal ion component is facilitated, that the metal ion component is coordinated with the amide group to form a complex, and that the compatibility of the complex with the acrylic resin is enhanced.

The amide group may be contained either in a state that a compound containing the amide group is dispersed in the acrylic resin or in a state chemically bonded to the structure of a polymer constituting the acrylic resin. It is however preferred that the amide group should be contained in the acrylic resin in the state chemically bonded to the structure of the polymer constituting the acrylic resin in that the dispersibility of the metal ion component can be enhanced to contain the metal ion component in a high proportion, and that deterioration with time caused by the isolation of the metal ion component from the resin structure can be lessened to provide an optical material having high durability.

As the compound containing the amide group, there may preferably be used an amide group-containing compound (hereinafter may also be referred to as "the specific amide group-containing compound") represented by the formula (3), (4) or (5).

Specific examples of the amide group-containing compound represented by the formula (3) include:
polymerizable amide group-containing compounds in which R³ in the formula (3) is an alkenyl group having 2 or 3 carbon atoms, such as (meth)acrylamide [the term "(meth)acrylamide" as used herein means each of "acrylamide" and "methacrylamide"]; N-alkyl-substituted (meth)acrylamides such as N-methyl(meth)acrylamide, N-ethyl(meth)acrylamide, N-isopropyl(meth)acrylamide, N-n-propyl(meth)acrylamide, N-t-butyl(meth)acrylamide, N-sec-butyl(meth)acrylamide and N-n-butyl(meth)acrylamide; and N,N-dialkyl-substituted (meth)acrylamides such as N,N-dimethyl(meth)acrylamide, N,N-diethyl(meth)acrylamide, N,N-diisopropyl(meth)acrylamide, N,N-di-n-propyl(meth)acrylamide, N-methyl-N-ethyl(meth)acrylamide, N-methyl-N-isopropyl(meth)acrylamide, N-methyl-N-n-propyl(meth)acrylamide, N-ethyl-N-isopropyl(meth)acrylamide and N-ethyl-N-n-propyl(meth)acrylamide; and
non-polymerizable amide group-containing compounds in which R³ in the formula (3) is a hydrogen atom or an alkyl group having 1 to 4 carbon atoms, such as formamide and acetamide; N-alkyl-substituted formamides such as N-methylformamide, N-ethylformamide, N-isopropylformamide and N-t-butylformamide; N-alkyl-substituted acetamides such as N-methylacetamide, N-ethylacetamide, N-isopropylacetamide and N-t-butylacetamide; N,N-dialkyl-substituted formamides such as N,N-dimethylformamide, N,N-diethylformamide, N,N-diisopropylformamide and N,N-di-t-butylformamide; and N,N-dialkyl-substituted acetamides such as N,N-dimethylacetamide, N,N-diethylacetamide, N,N-diisopropylacetamide and N,N-di-t-butylacetamide.

Specific examples of the amide group-containing compound represented by the formula (4) include:
polymerizable amide group-containing compounds in which R⁴ or R⁸ in the formula (4) is an alkenyl group having 2 or 3 carbon atoms, such as N,N'-methylenebis(meth)acrylamide, N,N'-ethylenebis(meth)acrylamide, N,N'-propylenebis(meth)acrylamide and N,N'-butylenebis(meth)acrylamide; and
non-polymerizable amide group-containing compounds in which R⁴ or R⁸ in the formula (4) is a hydrogen atom or an alkyl group having 1 to 4 carbon atoms, such as N,N'-ethylenebisformamide, N,N'-propylenebisformamide, N,N'-butylenebisformamide, N,N'-ethylenebisacetamide, N,N'-propylenebisacetamide and N,N'-butylenebisacetamide.

Specific examples of the amide group-containing compound represented by the formula (5) include:
polymerizable amide group-containing compounds in which R⁹ in the formula (5) is an alkenyl group having 2 or 3 carbon atoms, such as N-(meth)acryloylpyridine [the term "(meth)acryloyl" as used herein means each of "acryloyl" and "methacryloyl"], N-(meth)acryloylpiperidine, N-(meth)acryloylpiperazine, (meth)acryloylmorpholine and (meth)acryloylpiperidone; and
non-polymerizable amide group-containing compounds in which R⁹ in the formula (5) is a hydrogen atom or an alkyl group having 1 to 4 carbon atoms, such as 4-acetylmorpholine, 1-acetylpiperazine, 1-acetylpiperidine and 1-acetylpiperidone.

These specific amide group-containing compounds may be used either singly or in any combination thereof.

In the present invention, the specific amide group-containing compound is uniformly dispersed in the acrylic resin, whereby the amide group of the specific amide group-containing compound can be contained in the acrylic resin. Among the specific amide group-containing compounds, the polymerizable amide group-containing compounds in which R³ in the formula (3), R⁴ or R⁸ in the formula (4), or R⁹ in the formula (5) is an alkenyl group having 2 or 3 carbon atoms are copolymerizable with the specific phosphate group-containing compounds. Therefore, such a specific amide group-containing compound having polymerizability can be used as the whole or a part of the copolymerizable monomer for obtaining the specific acrylic copolymer resin, whereby an acrylic resin with both phosphate group and amide group chemically bonded to the structure of the polymer can be obtained.

The proportion of the specific amide group-containing compound to be used is preferably 1 to 60 mass%, particularly 1 to 50 mass%, based on the plastic optical material according to the present invention or the whole raw materials used for obtaining the plastic optical material.

The proportion of the amide group contained in the plastic optical material according to the present invention is preferably 0.3 to 30 mass%, particularly 0.4 to 20 mass%.

If the proportion of the specific amide group-containing compound to be used is lower than 1 mass%, it is impossible to disperse the metal ion component in a high proportion. Therefore, any optical material having intended performance characteristics such as good glare-proofness may not be obtained in some cases. If the proportion of the specific amide group-containing compound to be used exceeds 60 mass% on the other hand, it is difficult to uniformly disperse the specific amide group-containing compound itself in the optical material or the raw materials therefor, and the resulting optical material tends to become high in hygroscopicity, which is not preferable from the viewpoint of practical use.

The total content of the amide group and the phosphate group in the plastic optical material according to the present invention is preferably 0.8 to 50 mass%, particularly 1 to 40 mass%, based on the acrylic resin which is a resin component of the optical material.

If the total content of the amide group and the phosphate group is too low, it may be difficult in some cases to disperse the metal ion component sufficiently. If the total content of the amide group and the phosphate group is too high on the other hand, the dispersibility of the metal ion component may be lowered in some cases, and the resulting optical material tends to become high in hygroscopicity, which is not preferable from the viewpoint of practical use.

A proportion of the amide group to the phosphate group is preferably 10:90 to 70:30, particularly 15:85 to 60:40 in terms of a mass ratio of the amide group to the phosphate group.

If the proportion of the amide group is too low, it may be impossible in some cases to satisfactorily achieve the effect brought about by containing the amide group, i.e., the effect of enhancing the dispersibility of the metal ion component. On the other hand, a proportion of the amide group too high is not preferable because its effect is not brought about correspondingly to the proportion of the amide group contained.

The plastic optical materials according to the present invention can be produced with advantage by subjecting the monomer mixture containing at least the specific phosphate group-containing monomer and the specific amide group-containing compound to a polymerization treatment by a radical polymerization process in the presence of the metal compound which is a supply source of the metal ion component.

Specifically, the metal compound is added to the monomer mixture before the radical polymerization of the polymerizable component in the monomer mixture is conducted, thereby dissolving or dispersing the metal compound in the monomer mixture to prepare a monomer composition containing the specific phosphate group-containing monomer, the specific amide group-containing compound and the metal compound. This monomer composition is then subjected to the radical polymerization treatment.

In the monomer mixture, the total content of the phosphate group in the specific phosphate group-containing monomer and the amide group in the specific amide group-containing compound is 0.8 to 50 mass% based on the polymerizable component, and the proportion of the amide group to the phosphate group is 10:90 to 70:30 in terms of a mass ratio. In order to prepare such a monomer mixture, the above-described copolymerizable monomers may be used as needed.

The proportion of the metal compound to be used is 0.3 to 80 parts by mass per 100 parts by mass of the monomer mixture.

Satisfying the above conditions, the metal compound can be surely dissolved or dispersed in the monomer mixture, and so an optical material containing the phosphate group, amide group and metal ion component in the above-described respective proportions can be obtained.

In the preparation of the monomer mixture, the use of the polymerizable compound as the specific amide group-containing compound permits the provision of the specific acrylic copolymer resin with the amide group chemically bonded to the structure of the polymer, whereby the dispersibility of the metal ion component can be more enhanced.

In the polymerization treatment of the monomer mixture, no particular limitation is imposed on the radical polymerization process. Any known process making use of a usual radical polymerization initiator, such as bulk (cast) polymerization, suspension polymerization, emulsion polymerization or solution polymerization process, may be used.

The plastic optical materials according to the present invention can be produced with advantage by the above-described process. However, the process for producing the plastic optical materials according to the present invention is not limited to this process. The optical materials may also be produced by, for example, the following processes.
(1) A process comprising adding the specific metal compound, which is a supply source of the metal ion component, to the specific acrylic copolymer resin obtained by subjecting the monomer mixture to the radical polymerization treatment to mix them.
   In the process (1), specifically, there may be used a) a process in which the specific acrylic copolymer resin is heated and melted, and the metal compound is added to the melt to mix them, b) a process in which the specific acrylic copolymer resin is dissolved in an organic solvent or the like, and the metal compound is added to this solution to mix them, or the like.
(2) A process comprising radical-polymerizing a monomer mixture composed of the specific phosphate group-containing monomer and the copolymerizable monomer to prepare the specific acrylic copolymer resin and adding the specific amide group-containing compound and the metal compound, which is a supply source of the metal ion component, to this specific acrylic copolymer resin to mix them.

In the process (2), a process according to the process (1) may be utilized.

The thus-obtained plastic optical material may be used in various applications fields either as it is or by molding or forming and polishing it in the form of a plate, column, lens or the like as necessary for the end application intended.

In the above-described production processes, an acid derived from the specific metal compound is generated as a by-product as a result that a metal ion component is supplied from the metal compound, and the metal ion component is bonded to the phosphate group or amide group. It is more preferred that this acid should be removed by a proper process.

A treatment for removing the acid may be conducted after the monomer composition is prepared and before the monomer composition is subjected to the polymerization treatment. Specific examples thereof include a process in which the acid in the monomer composition is deposited, and crystals of the deposited acid are separated by filtration or the like, a process in which the monomer composition is heat-treated, thereby evaporating out the acid in the monomer composition, a process in which the acid is extracted from the monomer composition with a proper solvent, and a process in which the monomer composition is washed with water, thereby removing the acid in the monomer composition.

### EFFECTS OF THE INVENTION

According to the present invention, the amide group is contained together with the phosphate group in the acrylic resin, and so the metal ion component composed of a rare earth metal ion can be contained in the acrylic resin in a high proportion without increasing the content of the phosphate group. There are thus provided plastic optical materials which have performance characteristics that rays in a specific wavelength region according to the metal ion component are absorbed with high efficiency, desired optical properties such as good glare-proofness and moreover low water absorption property.

Accordingly, the plastic optical materials according to the present invention are suitable for use as specific visible ray-absorbing materials for absorbing rays in a specific visible wavelength region and can be used in, for example, glare-proof lenses for sunglasses, glare-proof filters and screen covers used for televisions and the like, luminance-controlling filters for lighting equipment, etc. They may also be used as optical goods having a small thickness, such as glare-proof sheets.

The plastic optical materials according to the present invention are suitable for optical filters used in color image display devices, for example, CRT displays, liquid crystal display devices, plasma displays, display devices making use of an electroluminescence device, etc. An optical filter formed of the plastic optical material according to the present invention is arranged on the front face or proper place of a color image display device, whereby the contrast, saturation or color purity of an image plane of the color image display device can be improved.

According to the production process of the present invention, the plastic optical materials described above can be produced directly and surely.

### BEST MODE FOR CARRYING OUT THE INVENTION

The present invention will hereinafter be described with reference to the following examples. However, this invention is not limited to and by these examples.

All designations of "part" or "parts" and "%" as will be used in the following examples mean part or parts by mass and mass% except for those as to light absorptivity and water absorptivity, respectively.

### 〈Example 1〉

A specific phosphate group-containing monomer (hereinafter referred to as "Monomer (M1)") represented by the following formula (7) in an amount of 31.25 parts and a specific phosphate group-containing monomer (hereinafter referred to as "Monomer (M2)") represented by the following formula (8) in an amount of 18.75 parts were thoroughly mixed with 20 parts of N,N-dimethylacrylamide (hereinafter referred to as "DMAA") and 30 parts of methyl methacrylate (hereinafter referred to as "MMA"), thereby preparing a monomer mixture. The contents of the phosphate group and amide group in the monomer mixture were 17.7% for the phosphate group and 8.5% for the amide group, both based on the polymerizable component, and the total content thereof was 26.2%. The proportion of the amide group to the phosphate group was 32.4:67.6 in terms of a mass ratio of the amide group to the phosphate group.

(CH₂=CCH₃COOC₂H₄O)₂PO(OH) Formula (7)

CH₂=CCH₃COOC₂H₄OPO(OH)₂ Formula (8)

To this monomer mixture were added 46 parts of neodymium acetate monohydrate (containing a trivalent neodymium ion in a proportion of 19.5 parts per 100 parts of the polymerizable component), and the resultant mixture was thoroughly stirred and mixed, thereby preparing a monomer composition.

To the thus-prepared monomer composition were added 2.0 parts of t-butyl peroxyneodecanoate. The resultant mixture was heated at 35°C for 1 hour, from 35°C to 60°C over 6 hours, from 60°C to 80°C over 2 hours and then from 80°C to 100°C over 1 hour. The mixture was held at 100°C for 2 hours to conduct cast polymerization, thereby producing a transparent plastic optical material in the form of a plate 2 mm thick, which was composed of a crosslinked acrylic copolymer containing the trivalent neodymium ion.

### 〈Example 2〉

Monomer (M1) in an amount of 10.6 parts and Monomer (M2) in an amount of 6.4 parts were thoroughly mixed with 10 parts of DMAA, 53 parts of MMA and 20 parts of phenoxyethyl methacrylate (hereinafter referred to as "PEMA"), thereby preparing a monomer mixture. The contents of the phosphate group and amide group in the monomer mixture were 6.0% for the phosphate group and 4.2% for the amide group, both based on the polymerizable component, and the total content thereof was 10.2%. The proportion of the amide group to the phosphate group was 41.2:58.8 in terms of a mass ratio of the amide group to the phosphate group.

To this monomer mixture were added 10 parts of neodymium acetate monohydrate (containing a trivalent neodymium ion in a proportion of 4.3 parts per 100 parts of the polymerizable component), and the resultant mixture was thoroughly stirred and mixed, thereby preparing a monomer composition.

This monomer composition was used to conduct cast polymerization in the same manner as in Example 1, thereby producing a transparent plastic optical material in the form of a plate 2 mm thick.

### 〈Example 3〉

Monomer (M1) in an amount of 17.5 parts and Monomer (M2) in an amount of 10.5 parts were thoroughly mixed with 16 parts of DMAA and 56 parts of MMA, thereby preparing a monomer mixture. The contents of the phosphate group and amide group in the monomer mixture were 9.6% for the phosphate group and 6.8% for the amide group, both based on the polymerizable component, and the total content thereof was 16.4%. The proportion of the amide group to the phosphate group was 41.5:58.5 in terms of a mass ratio of the amide group to the phosphate group.

To this monomer mixture were added 16 parts of neodymium acetate monohydrate (containing a trivalent neodymium ion in a proportion of 6.8 parts per 100 parts of the polymerizable component), and the resultant mixture was thoroughly stirred and mixed, thereby preparing a monomer composition.

This monomer composition was used to conduct cast polymerization in the same manner as in Example 1, thereby producing a transparent plastic optical material in the form of a plate 2 mm thick.

### 〈Example 4〉

Monomer (M1) in an amount of 3.1 parts and Monomer (M2) in an amount of 1.9 parts were thoroughly mixed with 1 part of DMAA, 50 parts of MMA and 44 parts of PEMA, thereby preparing a monomer mixture. The contents of the phosphate group and amide group in the monomer mixture were 1.8% for the phosphate group and 0.4% for the amide group, both based on the polymerizable component, and the total content thereof was 2.2%. The proportion of the amide group to the phosphate group was 18.2:81.8 in terms of a mass ratio of the amide group to the phosphate group.

To this monomer mixture were added 0.5 parts of neodymium acetate monohydrate (containing a trivalent neodymium ion in a proportion of 0.2 parts per 100 parts of the polymerizable component), and the resultant mixture was thoroughly stirred and mixed, thereby preparing a monomer composition.

This monomer composition was used to conduct cast polymerization in the same manner as in Example 1, thereby producing a transparent plastic optical material in the form of a plate 2 mm thick.

Five sheets of this plastic optical material were laminated on one another to produce a laminate.

### 〈Example 5〉

Monomer (M1) in an amount of 46.9 parts and Monomer (M2) in an amount of 28.1 parts were thoroughly mixed with 17 parts of DMAA and 8 parts of 2-ethylhexyl acrylate (hereinafter referred to as "2EHA"), thereby preparing a monomer mixture. The contents of the phosphate group and amide group in the monomer mixture were 26.5% for the phosphate group and 7.2% for the amide group, both based on the polymerizable component, and the total content thereof was 33.7%. The proportion of the amide group to the phosphate group was 21.4:78.6 in terms of a mass ratio of the amide group to the phosphate group.

To this monomer mixture were added 70 parts of neodymium acetate monohydrate (containing a trivalent neodymium ion in a proportion of 29.7 parts per 100 parts of the polymerizable component), and the resultant mixture was thoroughly stirred and mixed, thereby preparing a monomer composition.

This monomer composition was used to conduct cast polymerization in the same manner as in Example 1, thereby producing a transparent plastic optical material in the form of a plate 2 mm thick.

### 〈Example 6〉

Monomer (M1) in an amount of 10.6 parts and Monomer (M2) in an amount of 6.4 parts were thoroughly mixed with 22 parts of acryloylmorpholine (hereinafter referred to as "MOA"), 21 parts of MMA, 20 parts of PEMA and 20 parts of butoxyethyl methacrylate (hereinafter referred to as "BEMA"), thereby preparing a monomer mixture. The contents of the phosphate group and amide group in the monomer mixture were 6.0% for the phosphate group and 6.6% for the amide group, both based on the polymerizable component, and the total content thereof was 12.6%. The proportion of the amide group to the phosphate group was 52.4:47.6 in terms of a mass ratio of the amide group to the phosphate group.

A monomer composition was prepared and a transparent plastic optical material in the form of a plate 2 mm thick was produced in the same manner as in Example 2 except that this monomer mixture was used.

### 〈Example 7〉

Monomer (M1) in an amount of 15.6 parts and Monomer (M2) in an amount of 9.4 parts were thoroughly mixed with 5 parts of N,N'-methylenebisacrylamide (hereinafter referred to as "MBAA") and 70 parts of MMA, thereby preparing a monomer mixture. The contents of the phosphate group and amide group in the monomer mixture were 8.8% for the phosphate group and 2.7% for the amide group, both based on the polymerizable component, and the total content thereof was 11.5%. The proportion of the amide group to the phosphate group was 23.5:76.5 in terms of a mass ratio of the amide group to the phosphate group.

A monomer composition was prepared and a transparent plastic optical material in the form of a plate 2 mm thick was produced in the same manner as in Example 2 except that this monomer mixture was used.

### 〈Example 8〉

Monomer (M1) in an amount of 31.25 parts and Monomer (M2) in an amount of 18.75 parts were thoroughly mixed with 30 parts of DMAA, 10 parts of MMA and 10 parts of n-butyl methacrylate (hereinafter referred to as "n-BMA"), thereby preparing a monomer mixture. The contents of the phosphate group and amide group in the monomer mixture were 17.7% for the phosphate group and 12.7% for the amide group, both based on the polymerizable component, and the total content thereof was 30.4%. The proportion of the amide group to the phosphate group was 41.8:58.2 in terms of a mass ratio of the amide group to the phosphate group.

To this monomer mixture were added 20 parts of neodymium acetate monohydrate (containing a trivalent neodymium ion in a proportion of 8.5 parts per 100 parts of the polymerizable component) and 10 parts of praseodymium acetate dihydrate (containing a trivalent praseodymium ion in a proportion of 4.0 parts per 100 parts of the polymerizable component), and the resultant mixture was thoroughly stirred and mixed, thereby preparing a monomer composition.

This monomer composition was used to conduct cast polymerization in the same manner as in Example 1, thereby producing a transparent plastic optical material in the form of a plate 2 mm thick.

### 〈Example 9〉

A transparent plastic optical material in the form of a plate 2 mm thick was produced in the same manner as in Example 8 except that 10 parts of holmium acetate tetrahydrate (containing a trivalent holmium ion in a proportion of 4.0 parts per 100 parts of the polymerizable component) were used in place of 10 parts of praseodymium acetate dihydrate.

### 〈Example 10〉

A transparent plastic optical material in the form of a plate 2 mm thick was produced in the same manner as in Example 7 except that a monomer mixture was prepared by using 8 parts of N,N-dimethylacetamide (hereinafter referred to as "DMAcA") in place of 5 parts of MBAA and changing the amount of MMA from 70 parts to 67 parts. The contents of the phosphate group and amide group in the monomer mixture were 8.8% for the phosphate group and 3.9% for the amide group, both based on the polymerizable component, and the total content thereof was 12.7%. The proportion of the amide group to the phosphate group was 30.7:69.3 in terms of a mass ratio of the amide group to the phosphate group.

### 〈Comparative Example 1〉

Monomer (M1) in an amount of 50 parts and Monomer (M2) in an amount of 30 parts were thoroughly mixed with 20 parts of MMA, thereby preparing a monomer mixture.

To this monomer mixture were added 16 parts of neodymium acetate monohydrate (containing a trivalent neodymium ion in a proportion of 6.8 parts per 100 parts of the polymerizable component), and the resultant mixture was thoroughly stirred and mixed, thereby preparing a monomer composition.

This monomer composition was used to conduct cast polymerization in the same manner as in Example 1, thereby producing a transparent plastic optical material in the form of a plate 2 mm thick.

The formulations of the monomer compositions prepared in the above Examples 1-10 and Comparative Example 1, and the contents of the phosphate group, amide group and respective metal ions in the monomer compositions are given collectively in the following Table 1.

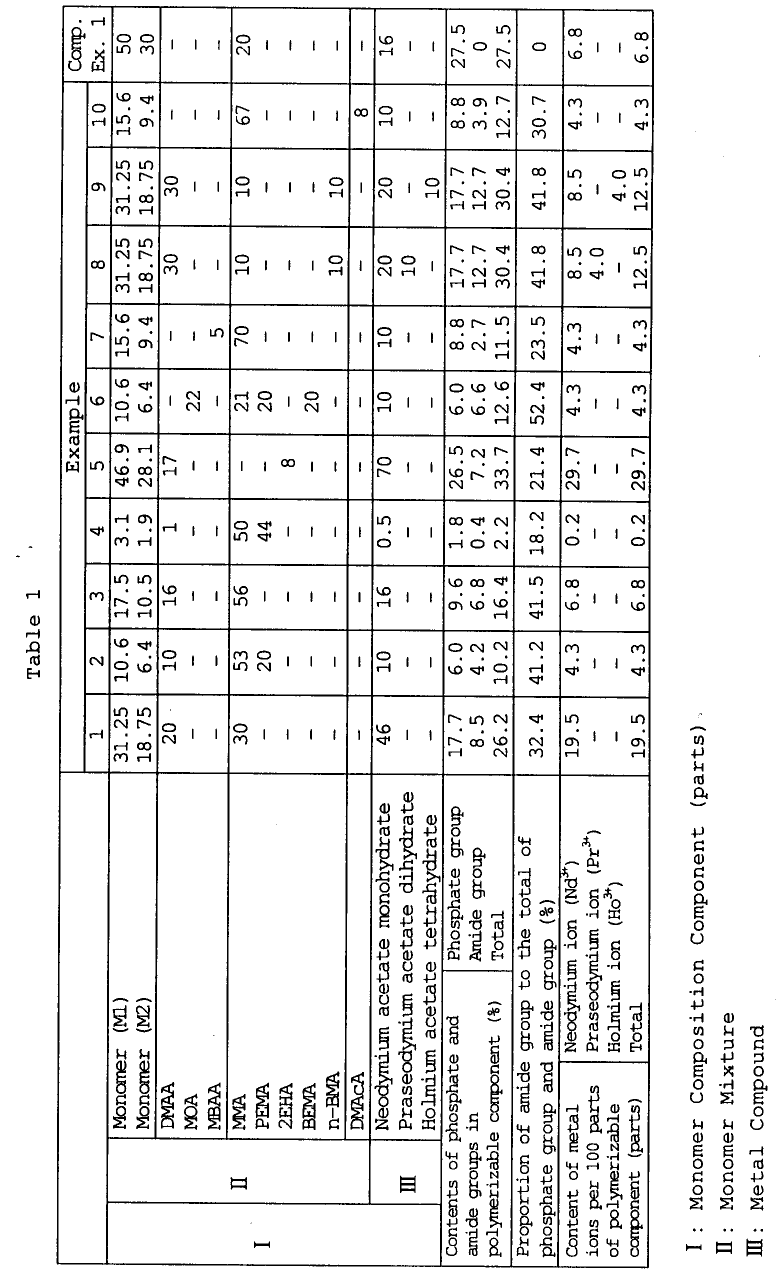

### 〈Evaluation of plastic optical material〉

The plastic optical materials according to Examples 1 to 10 and Comparative Example 1 were respectively used as specimens (in Example 4, the laminate was used) to evaluate their light absorptivities in a specific wavelength region, glare-proofness and water absorptivities in accordance with the following respective methods.

### [Light absorptivity]

A spectral transmittance curve of each specimen in a wavelength region of 400 to 800 nm was determined by means of an autographic spectrophotometer "U-4000" (manufactured by Hitachi Ltd.), and the quantity of transmitted light in a wavelength region of 560 to 610 nm on the chart of the thus-obtained spectral transmittance curve was obtained, thereby determining a light absorptivity (%) in this wavelength region.

### [Glare-proofness]

As a referential example, a light absorptivity of a glare-proof glass lens "NEO" (product of HOYA Corporation) was determined to compare the light absorptivity with those of specimens. Any specimen whose light absorptivity is higher than the value in the referential example is judged to be glare-proof.

### [Water absorptivity]

After the mass W₀ of a specimen was measured, and the specimen was immersed at 23°C for 20 hours in water, the water attached to the surfaces of the specimen was wiped out, and the mass W₁ (g) of the thus-treated specimen was then measured, whereby the water absorptivity of the specimen was calculated out in accordance with the following numerical expression: Water absorptivity (%) = {(W₁ - W₀)/W₀} x 100

The results of the above evaluation are shown in Table 2.

**Table 2**

| | Thickness of specimen (mm) | Evaluation result | | |
|---|---|---|---|---|
| | | Light absorptivity (%) | Glare-proofness | Water absorptivity (%) |
| Ex. 1 | 2 | 51.8 | Good | 3.8 |
| Ex. 2 | 2 | 23.1 | Good | 0.8 |
| Ex. 3 | 2 | 31.8 | Good | 1.5 |
| Ex. 4 | 10 | 9.2 | Good | 0.7 |
| Ex. 5 | 2 | 56.4 | Good | 4.0 |
| Ex. 6 | 2 | 25.5 | Good | 0.5 |
| Ex. 7 | 2 | 21.0 | Good | 0.8 |
| Ex. 8 | 2 | 39.7 | Good | 3.5 |
| Ex. 9 | 2 | 32.6 | Good | 3.3 |
| Ex. 10 | 2 | 22.4 | Good | 1.8 |
| Comp. Ex. 1 | 2 | 33.2 | Good | 6.8 |
| Ref. Ex. | 2 | 8.2 | - | - |

As apparent from Table 2, it was confirmed that the optical materials according to Examples 1 to 10 had excellent glare-proofness and were low in water absorptivity.

On the contrary, the optical material according to Comparative Example 1 had good glare-proofness, but was high in water absorptivity and involves a problem from the viewpoint of practical use.

### 〈Comparative Preparation Example 1〉

A monomer composition was prepared in the same manner as in Example 1 except that 20 parts of PEMA was used in place of 20 parts of DMAA. However, any transparent monomer composition, in which neodymium acetate monohydrate was dissolved, was unable to be obtained because no amide group was contained in the monomer mixture.

### 〈Comparative Preparation Example 2〉

Monomer (M1) in an amount of 43.8 parts and Monomer (M2) in an amount of 26.2 parts were thoroughly mixed with 3.3 parts of DMAA and 26.7 parts of MMA, thereby preparing a monomer mixture. The contents of the phosphate group and amide group in the monomer mixture were 24.8 parts for the phosphate group and 1.4 parts for the amide group, both per 100 parts of the polymerizable component, and the total content thereof was 26.2 parts. The proportion of the amide group to the phosphate group was 5.3:94.7 in terms of a mass ratio of the amide group to the phosphate group.

A monomer composition was prepared in the same manner as in Example 1 except that this monomer mixture was used. However, any transparent monomer composition, in which neodymium acetate monohydrate was dissolved, was unable to be obtained because the proportion of the amide group contained in the monomer mixture was too low.

### 〈Comparative Preparation Example 3〉

Monomer (M1) in an amount of 3.5 parts and Monomer (M2) in an amount of 2.1 parts were thoroughly mixed with 57 parts of DMAA and 37.4 parts of MMA, thereby preparing a monomer mixture. The contents of the phosphate group and amide group in the monomer mixture were 2.0 parts for the phosphate group and 24.2 parts for the amide group, both per 100 parts of the polymerizable component, and the total content thereof was 26.2 parts. The proportion of the amide group to the phosphate group was 92.4:7.6 in terms of a mass ratio of the amide group to the phosphate group.

A monomer composition was prepared in the same manner as in Example 1 except that this monomer mixture was used. However, any transparent monomer composition, in which neodymium acetate monohydrate was dissolved, was unable to be obtained because the proportion of the phosphate group contained in the monomer mixture was too low.

## Claims

1. A plastic optical material comprising an acrylic resin, and a phosphate group, an amide group and a metal ion component composed of a rare earth metal ion contained in the acrylic resin.

2. The plastic optical material according to Claim 1, wherein the phosphate group exists in the form chemically bonded to the structure of a polymer constituting the acrylic resin.

3. The plastic optical material according to Claim 2, wherein the polymer constituting the acrylic resin is a copolymer obtained by copolymerizing a phosphate group-containing monomer represented by the following formula (1) and a monomer copolymerizable therewith:
PO(OH)ₙR₃₋ₙ Formula (1)
wherein R means a polymerizable functional group represented by the following formula (2), and n is 1 or 2:
CH₂=CXCOO(C₂H₄O)ₘ- Formula (2)
wherein X denotes a hydrogen atom or a methyl group, and m is an integer of 0 to 5.

4. The plastic optical material according to any one of Claims 1 to 3, wherein the amide group is contained in a state that an amide group-containing compound represented by the following formula (3), (4) or (5) is dispersed in the acrylic resin: 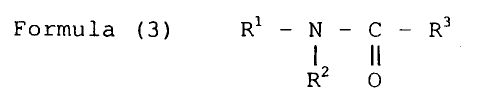 wherein R¹ and R² independently mean a hydrogen atom, an alkyl group having 1 to 4 carbon atoms or a phenyl group and may be the same or different from each other, and R³ denotes a hydrogen atom, an alkyl group having 1 to 4 carbon atoms or an alkenyl group having 2 or 3 carbon atoms; 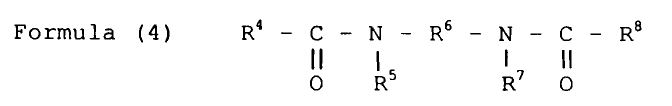 wherein R⁴ and R⁸ independently mean a hydrogen atom, an alkyl group having 1 to 4 carbon atoms or an alkenyl group having 2 or 3 carbon atoms and may be the same or different from each other, R⁵ and R⁷ independently denote a hydrogen atom, an alkyl group having 1 to 4 carbon atoms or a phenyl group and may be the same or different from each other, and R⁶ represents an alkylene group having 1 to 6 carbon atoms; or 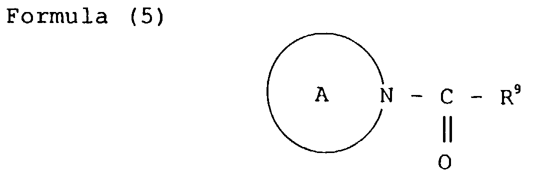 wherein a ring A means a 4-, 5- or 6-membered ring or a heterocyclic ring thereof, and R⁹ denotes a hydrogen atom, an alkyl group having 1 to 4 carbon atoms or an alkenyl group having 2 or 3 carbon atoms.

5. The plastic optical material according to any one of Claims 1 to 3, wherein the amide group exists in the form chemically bonded to the structure of a polymer constituting the acrylic resin.

6. The plastic optical material according to any one of Claims 1 to 3, wherein the total content of the amide group and the phosphate group in the acrylic resin is 0.8 to 50 mass%, a proportion of the amide group to the phosphate group is 10:90 to 70:30 in terms of a mass ratio, and the content of the metal ion component in the acrylic resin is 0.1 to 30 mass%.

7. The plastic optical material according to any one of Claims 1 to 3, which is used as a specific visible ray-absorbing material for absorbing rays in a specific visible wavelength region.

8. A process for producing a plastic optical material, which comprises the step of subjecting 100 parts by mass of the following monomer mixture (I) to a polymerization treatment in the presence of 0.3 to 80 parts by mass of a rare earth metal compound:
Monomer mixture (I): a monomer mixture containing at least a phosphate group-containing monomer represented by the following formula (1) and an amide group-containing compound represented by the following formula (3), (4) or (5), wherein the total content of the phosphate group in the phosphate group-containing monomer and the amide group in the amide group-containing compound is 0.8 to 50 mass% based on the whole polymerizable component, and a proportion of the amide group to the phosphate group is 10:90 to 70:30 in terms of a mass ratio:
PO(OH)ₙR₃₋ₙ Formula (1)
wherein R means a polymerizable functional group represented by the following formula (2), and n is 1 or 2:
CH₂=CXCOO(C₂H₄O)ₘ- Formula (2)
wherein X denotes a hydrogen atom or a methyl group, and m is an integer of 0 to 5: 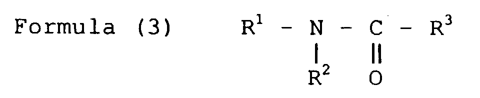 wherein R¹ and R² independently mean a hydrogen atom, an alkyl group having 1 to 4 carbon atoms or a phenyl group and may be the same or different from each other, and R³ denotes a hydrogen atom, an alkyl group having 1 to 4 carbon atoms or an alkenyl group having 2 or 3 carbon atoms; 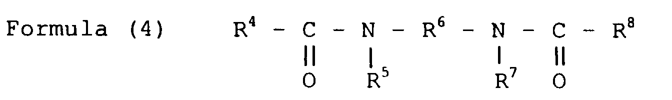 wherein R⁴ and R⁸ independently mean a hydrogen atom, an alkyl group having 1 to 4 carbon atoms or an alkenyl group having 2 or 3 carbon atoms and may be the same or different from each other, R⁵ and R⁷ independently denote a hydrogen atom, an alkyl group having 1 to 4 carbon atoms or a phenyl group and may be the same or different from each other, and R⁶ represents an alkylene group having 1 to 6 carbon atoms; or 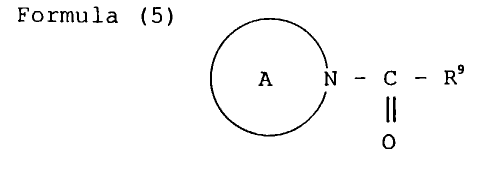 wherein a ring A means a 4-, 5- or 6-membered ring or a heterocyclic ring thereof, and R⁹ denotes a hydrogen atom, an alkyl group having 1 to 4 carbon atoms or an alkenyl group having 2 or 3 carbon atoms.

9. The process according to Claim 8 for producing a plastic optical material, wherein a polymerizable compound in which R³ in the formula (3), R⁴ or R⁸ in the formula (4) or R⁹ in the formula (5) is an alkenyl group having 2 or 3 carbon atoms is used as the amide group-containing compound.
